Europäisches Patentamt

European Patent Office

Office européen des brevets

(11) Numéro de publication: **0 237 447**

**A1**

## (12) DEMANDE DE BREVET EUROPEEN

(21) Numéro de dépôt: 87420033.0

(22) Date de dépôt: 05.02.87

(51) Int. Cl.³: **H 02 G 7/05**

(30) Priorité: 10.02.86 FR 8602192

(43) Date de publication de la demande:
16.09.87 Bulletin 87/38

(84) Etats contractants désignés:
AT BE CH DE ES GB GR IT LI LU NL SE

(71) Demandeur: **MALICO**
Zone Industrielle de l'Argentière 9-11, rue Baptiste Marcet
F-38600 Fontaine(FR)

(72) Inventeur: **Libert, Jean-Claude**
**Résidence du Parc Epicéa B**
**F-38430 Moirans(FR)**

(72) Inventeur: **Lienart, Jean-Pierre**
**Saint-Martin-d'Uriage**
**F-38420 Uriage(FR)**

(74) Mandataire: **Maureau, Pierre et al,**
**Cabinet GERMAIN & MAUREAU B.P. 3011**
**F-69392 Lyon Cedex 03(FR)**

(54) Pince d'ancrage pour câble cylindrique.

(57) Cette pince est du type formée d'un fourreau (1) fendu muni d'un évidement (3) et d'un noyau compressible (2), présentant une cavité (11) pour le logement du câble, de forme extérieure complémentaire de celle de l'évidement (3) du fourreau et apte à être coincé dans celui-ci par coulissement.

Selon l'invention, l'évidement (3) et le noyau (2) présentent chacun une conicité complémentaire dans le sens transversal et sur les faces en regard du fourreau (1) et du noyau (2) sont ménagés des profils complémentaires de type à nervures-rainures respectivement (7, 14) s'étendant parallèlement entre eux et inclinés d'avant en arrière, en direction du fond (3b) de l'évidement du fourreau (1) par rapport au sens de traction sur le câble.

Chacun des profils complémentaires (7, 14) est incliné d'environ 30° par rapport à l'horizontale-fond-(3b).

La conicité dans le sens-transversal-de-l'évidement (3) et du noyau est d'environ 8°.

FIG.1

EP 0 237 447 A1

1

# PINCE D'ANCRAGE POUR CABLE CYLINDRIQUE

La présente invention a pour objet une pince d'ancrage pour câble cylindrique, tel que câble électrique à un seul brin ou câble porteur d'un ensemble de câbles conducteurs torsadés.

Les pinces d'ancrage de ce type sont généralement formées d'un fourreau fendu muni d'un évidement et d'un noyau compressible présentant une cavité pour le logement du câble, de forme extérieure complémentaire de celle de l'évidement du fourreau et apte à être coincé·par coulissement dans celui-ci.

En particulier, dans une pince d'ancrage de ce type déjà connue, le fourreau de section générale en forme de U présente un évidement prismatique de section rectangulaire et présentant une conicité dans la direction longitudinale, et le noyau compressible est formé de deux moitiés de prisme de formes complémentaires de celle de l'évidement, imbriquées l'une dans l'autre et ménageant entre elles une cavité pour le logement du câble. Le serrage du câble logé dans ce noyau est effectué par coulissement du noyau formant coin dans l'évidement du fourreau et par coincement de ce noyau sur deux côtés opposés de faible pente du prisme.

Dans une autre pince d'ancrage du même type, l'évidement du fourreau est conique et le noyau compressible a la forme d'un cône de même pente que celui de l'évidement.

Pour l'obtention d'un bon serrage, il est nécessaire de prévoir une faible conicité pour le noyau et le fourreau, ce qui implique forcément pour ces deux types de pinces une course de serrage axiale relativement importante pour des diamètres de câbles relativement voisins, du fait que la conicité est dans le sens axial, ainsi que la nécessité de prévoir un grand nombre de pinces d'ancrage pour différents diamètres de câbles.

En outre, avec les mâchoires coniques, il se produit généralement lors de l'ancrage du câble un recul de celui-ci, de sorte que, lorsque le câble doit être ancré avec une tension déterminée, il est nécessaire lors de sa mise en tension de dépasser la valeur désirée de tension pour tenir compte du recul ultérieur de ce câble.

Le but de la présente invention est de remédier à ces inconvénients et est notamment de fournir une pince d'ancrage du type précité permettant d'obtenir un bon serrage pour un faible déplacement axial du noyau dans le fourreau et pouvant donc convenir à des câbles présentant un éventail de diamètres important, et pour laquelle un recul du câble lors de sa mise en place provoque une augmentation très rapide du serrage de celui-ci, de façon que le recul du câble se trouve, par voie de conséquence, limité à une valeur quasiment négligeable.

Ce but est atteint en ce que dans la pince d'ancrage selon l'invention, l'évidement et le noyau présentent chacun une conicité complémentaire dans le sens transversal.

Ainsi, le serrage du câble à l'intérieur de la pince s'effectue par simple enfoncement du noyau à l'intérieur duquel il est placé, dans l'évidement du fourreau associé et il peut donc s'effectuer avec un très faible déplacement axial.

Avantageusement, sur les faces latérales en regard du fourreau et du noyau sont ménagés des profils complémentaires de type à nervures-rainures s'étendant parallèlement entre eux et inclinés d'avant en arrière, en direction du fond de l'évidement du fourreau par rapport au sens de traction sur le câble.

Ainsi, une traction vers l'arrière sur le câble par rapport au fourreau provoque le glissement du noyau vers le fond de l'évidement du fourreau le long des rampes formées par les profils complémentaires et, par conséquent, un resserrement du noyau sur le câble.

Un choix judicieux de la pente des profils inclinés complémentaires et de la conicité transversale du fourreau et du noyau permet de réduire la course de serrage axiale et donc d'élargir le domaine d'utilisation d'une même pince à toute une gamme de diamètres.

De préférence, la conicité transversale du fourreau sera de l'ordre de 6° et la pente des profils complémentaires sera de l'ordre de 30°.

De toute façon, l'invention sera bien comprise et d'autres caractéristiques seront mises en évidence à l'aide de la description qui suit en référence au dessin schématique annexé représentant une forme de réalisation préférée de cette pince d'ancrage

Figure 1 en est une vue en perspective ;

Figure 2 en est une vue de dessus ;

Figure 3 est une vue en coupe selon III-III de figure 2 ;

Figure 4 est une vue en bout de la pince avant introduction du noyau dans l'évidement du fourreau ;

Figure 5 est une vue similaire à figure 4 montrant le noyau en place dans le fourreau.

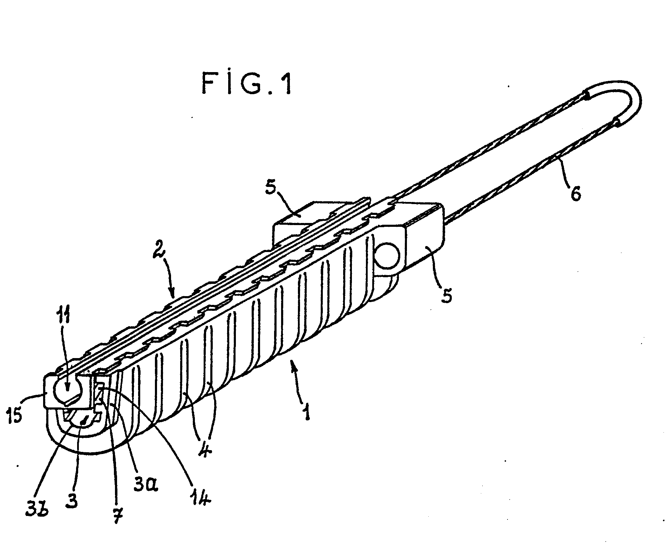

Ainsi que le montre notamment la figure 1, la pince d'ancrage selon l'invention est formée d'un fourreau 1 ayant en section transversale sensiblement la forme d'un U et d'un noyau compressible 2.

Le fourreau 1 délimite intérieurement un évidement 3 de forme trapézoïdale, dont les parois latérales 3a sont inclinées d'environ 6° par rapport à la verticale , et est muni extérieurement de nervures de renfort 4.

Il présente également de façon connue en soi à une extrémité deux bossages 5 percés pour son accrochage au moyen d'un câble 6.

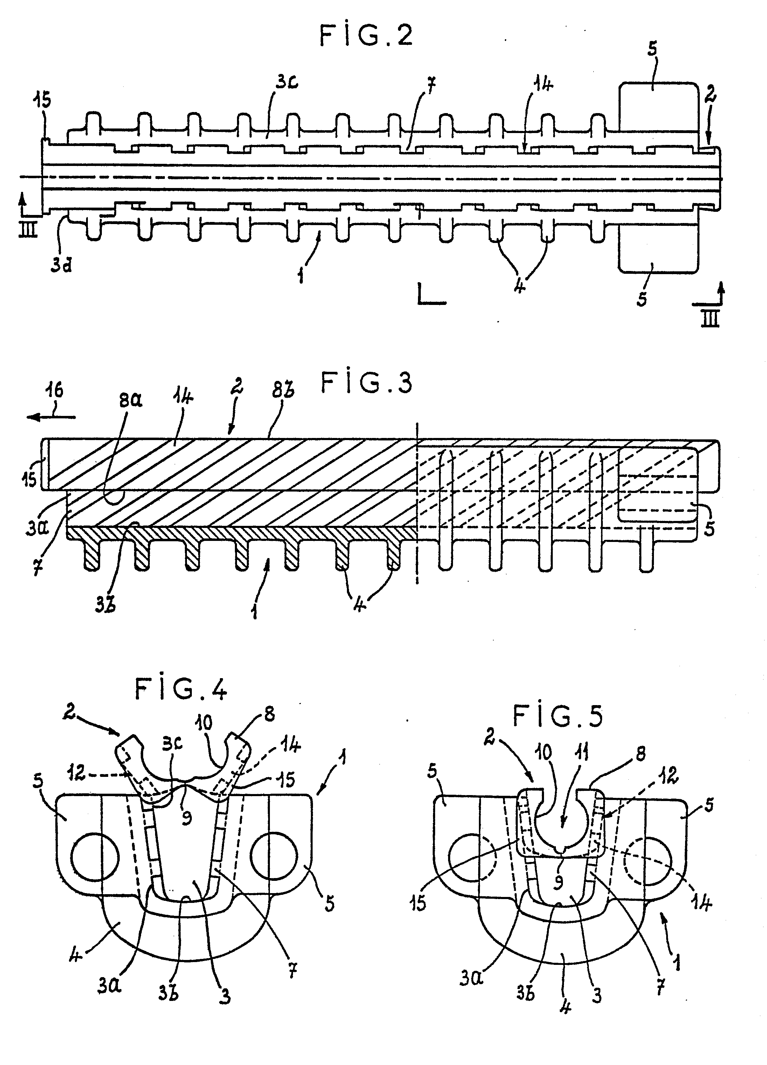

Sur les deux parois latérales 3a de l'évidement 3 sont formées des nervures 7 de section rectangulaire. Ainsi que le montre plus particulièrement la figure 3, ces nervures 7 s'étendent parallèlement entre elles de l'arrière vers l'avant, c'est-à-dire de la gauche vers la droite dans le cas de cette figure 3, à partir du fond 3b de l'évidement jusqu'à l'extrémité supérieure 3c de celui-ci. Ces nervures 7 sont régulièrement espacées entre elles et ont les mêmes dimensions. Elles forment chacune avec le fond 3b de l'évidement un angle d'environ 30°.

Dans l'exemple du dessin, cet angle est égal à 33°, mais sa valeur peut varier de plus ou moins 10° par rapport à cette valeur.

Ainsi que le montre notamment la figure 4, le noyau compressible 2 est formé de deux mâchoires longitudinales 8 reliées ensemble par un voile de matière 9 s'étendant sur toute leur longueur.

Chaque mâchoire 8 a une section sensiblement rectangulaire et présente sur sa face interne, située en vis à vis de celle de l'autre mâchoire 8, un évidement 10 en forme de portion de cylindre. Les deux évidements 10 coopèrent pour former une cavité 11 pour le logement d'un câble (non représenté sur le dessin) devant être ancré à l'aide de cette pince.

Les deux mâchoires 8 sont obtenues par moulage en une seule pièce avec le voile de matière 9. Ainsi que le montre la figure 4, ce moulage est réalisé de façon que les deux mâchoires 8 forment à l'état libre un angle obtus supérieur à l'angle d'ouverture de l'évidement 3.

Le noyau compressible 2 n'est donc introduit qu'à force dans l'évidement 3, en rapprochant l'une de l'autre les deux mâchoires 8, ce rapprochement étant rendu possible par le voile de matière 9 constituant un pont déformable entre celles-ci et par l'élasticité du matériau constituant ces mâchoires 8.

Sur la face externe 12 de chaque mâchoire 8, qui est destinée à coopérer avec la paroi latérale correspondante de l'évidement 3, sont ménagées des rainures 14 complémentaires des nervures 7 du fourreau 1.

Ainsi que le montre notamment la figure 3, chacune de ces rainures 14 s'étend d'arrière en avant, c'est-à-dire de la gauche vers la droite, de la partie d'articulation 8a de chaque mâchoire 8 jusque vers son bord libre 8b. Ces rainures 14 présentent entre elles le même espacement que les nervures 7 et sont inclinées de même que celles-ci d'environ 33° par rapport à l'horizontale.

Une butée axiale 15 est également prévue à l'extrémité de chacune des mâchoires 8 du noyau 2 du côté du déplacement axial du noyau 2 dans le fourreau lors de son enfoncement dans celui-ci (flèche 16 sur le dessin). Cette butée déborde par rapport au noyau 2 et est apte à coopérer avec l'extrémité 3d du fourreau 1.

Des picots (non représentés sur le dessin) sont réalisés de façon connue en soi sur les parois de la cavité 11 de façon à exercer un effet de retenue sur le câble logé dedans.

Le fonctionnement de cette pince est le suivant :

Tout d'abord, le noyau compressible 2 est introduit à force dans l'évidement 3 du fourreau, après rapprochement l'une de l'autre de ses mâchoires, et de façonque les nervures 7 formées sur les parois latérales de cet évidement s'engagent dans les rainures 14 ménagées dans les faces externes de ces mâchoires 8.

Une fois le noyau 2 mis en place dans le fourreau 1, il ne peut plus être retiré de celui-ci par simple coulissement le long des rampes formées par les nervures 7, puisque ses butées 15 viennent alors en butée contre l'extrémité 3d du fourreau 3.

Ce noyau 2 est donc imperdable.

Pour assurer l'ancrage d'un câble, il suffit tout d'abord de "sortir" le noyau 2 au maximum du fourreau 1 en le faisant coulisser vers le haut le long des nervures 7, sa sortie étant de toute façon limitée par les butées 15.

Dans cette position sortie, le noyau 2 offre alors une ouverture maximale 11 pour l'introduction d'un câble.

Le câble étant mis en place dans la cavité 11, il suffit alors d'exercer sur celui-ci une traction dans le sens de la flèche 16. Cette traction provoque le glissement du noyau 2 le long des nervures 7 et, par conséquent, l'enfoncement de celui-ci à l'intérieur de l'évidement 3 et donc le resserrement de ses mâchoires 8.

Comme la pente des nervures 7 et des rainures 14 est relativement forte (environ 30°), le serrage du câble par resserrement des mâchoires 8 s'effectue avec une course axiale très limitée, quel que soit le diamètre du câble utilisé.

En outre, comme le noyau 2 et l'évidement 3 ont chacun une conicité transversale d'angle très faible (environ 6°), le serrage proprement dit est exercé entre des surfaces très peu inclinées et est donc très efficace.

On voit donc qu'avec la combinaison d'une conicité transversale d'angle faible et d'une série de rampes latérales d'angle élevé, on peut obtenir un serrage important pour des câbles de dimensions très variables avec une course axiale très faible.

Comme il va de soi, la présente invention ne se limite pas à la seule forme d'exécution décrite ci-avant à titre d'exemple non limitatif ; elle en embrasse, au contraire, toutes les variantes mettant en oeuvre des moyens similaires ou équivalents.

0237447

## - REVENDICATIONS -

1- Pince d'ancrage pour câble cylindrique, du type formé d'un fourreau fendu muni d'un évidement et d'un noyau compressible présentant une cavité pour le logement du câble, de forme extérieure complémentaire de celle de l'évidement du fourreau et apte à être coincé dans celui-ci, par coulissement, caractérisée en ce que l'évidement (3) et le noyau (2) présentent chacun une conicité complémentaire dans le sens transversal.

2- Pince d'ancrage selon la revendication 1, caractérisée en ce que sur les faces latérales en regard (respectivement (3a,12)) du fourreau (1) et du noyau (2) sont ménagés des profils complémentaires de type à nervures-rainures respectivement (7,14) s'étendant parallèlement entre eux et inclinés d'avant en arrière, en direction du fond (3b) de l'évidement du fourreau (1) par rapport au sens de traction (16) sur le câble.

3- Pince d'ancrage selon la revendication 2, caractérisée en ce que les profils complémentaires (7,14) ont des sections transversales rectangulaires.

4- Pince d'ancrage selon l'une des revendications 2 ou 3, caractérisée en ce que chacun des profils complémentaires (7,14) est incliné d'environ 30° par rapport à l'horizontale (fond (3b)).

5- Pince d'ancrage selon l'une des revendications 2 à 4, caractérisée en ce que les profils complémentaires sont constitués par des rainures (14) ménagées sur les faces externes (12) du noyau (2) et par des nervures (7) formées sur les faces internes du fourreau (1).

6- Pince d'ancrage selon l'une quelconque des revendications 1 à 5, caractérisée en ce que le noyau (2) est formé de deux mâchoires (8) reliées ensemble par un voile de matière (9) et formant entre elles à l'état libre un angle supérieur à l'angle d'ouverture de l'évidement (3) du fourreau (1).

7- Pince d'ancrage selon l'une quelconque des revendications 2 à 6, caractérisée en ce qu'une butée (15) est prévue à l'extrémité de chacune des mâchoires (8) du noyau (2) du côté du déplacement axial du noyau (2) dans le fourreau (1) lors de son enfoncement dans celui-ci.

8- Pince d'ancrage selon l'une quelconque des revendications 1 à 7, caractérisée en ce que la conicité dans le sens transversal de l'évidement (3) et du noyau (2) est d'environ 6°.

9- Pince d'ancrage selon l'une quelconque des revendications 1 à 8, caractérisée en ce que des picots de retenue ou similaire sont formés sur les parois de la cavité (11).

# FİG.1

2/2

0237447

FIG.2

FIG.3

FIG.4

FIG.5

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | FR-A-2 343 168 (DERVAUX) <br> * page 4, lignes 16-24; page 5, lignes 15-31; page 6, lignes 10-17; figures 7,8 * | 1,8 | H 02 G 7/05 |
| Y | | 2,3,6, 7,9 | |
| Y | FR-A-2 218 790 (DERVAUX) <br> * Page 3, lignes 29-35; page 6, lignes 1-14 * | 2,3 | |
| Y | EP-A-0 136 242 (MALICO) <br> * Page 4, lignes 8-17 * | 6,9 | |
| Y | EP-A-0 132 208 (MALICO) <br> * Page 5, lignes 15-18; figure 4 * | 7 | **DOMAINES TECHNIQUES RECHERCHES (Int. Cl.4)** |
| A | FR-A-2 179 678 (DERVAUX) <br> * Page 4, lignes 1-27; figures 1-8 * | 1 | H 02 G 7/00 <br> F 10 G 11/00 |

Le présent rapport de recherche a été établi pour toutes les revendications

| Lieu de la recherche | Date d'achèvement de la recherche | Examinateur |
|---|---|---|
| LA HAYE | 15-05-1987 | TIELEMANS H.L.A. |